# EUROPEAN PATENT APPLICATION

(11) **EP 1 721 916 A1**
(43) Date of publication of application: **15.11.2006**
(21) Application number: 06252413.7
(22) Date of filing: 05.05.2006
(51) Int. Cl.: C08F 220/12, C10M 145/14

(54) **Hydrolytically stable viscosity index improvers**

(30) Priority: 09.05.2005 US 124766
(71) Applicant: Afton Chemical Corporation, Richmond, VA 23219 (US)
(72) Inventor: Duggal, Akhilesh, Midlothian, Virginia 23112 (US); Ryan, Helen T., London W6 8NL (GB); Slayton, Theresa L., Richmond, Virginia 23225 (US); Sheets, Roger M., Glen Allen, Virginia 23060 (US)
(74) Representative: Cresswell, Thomas Anthony

(57) **Abstract**

An acrylic acid ester polymer having improved characteristics and oleaginous compositions containing the acrylic acid ester polymer. The acrylic acid ester polymer includes a copolymer derived from a first acrylic acid ester monomer having from about 1 to about 4 carbon atoms, a second acrylic acid ester monomer having from about 12 to about 14 carbon atoms, and a third acrylic acid ester monomer having from about 16 to about 20 carbon atoms. The copolymer has a weight average molecular weight ranging from about 20,000 to about 100,000 daltons and contains no more than about 1 weight percent unreacted monomer.

## Description

### FIELD OF THE DISCLOSURE:

The disclosure is directed to hydrolytically stable oleaginous fluids and improved additives for oleaginous fluids, particularly certain poly(alkyl (meth)acrylates) useful as additives for hydraulic fluids.

### BACKGROUND AND SUMMARY:

Hydraulic systems, e.g., systems wherein the operation of high speed, high pressure hydraulic pumps is subject to wide temperature variations, can impose severe demands on hydraulic fluids. Under such severe operating conditions, water or moisture ingress to the system can have a serious effect on the performance of the hydraulic fluid if reactive acidic components are present in the fluid.

Additives for improving properties of hydraulic fluids such as viscosity index improving additives are known. Viscosity index improving additives reduce the influence of temperature changes on fluid viscosity. Of the viscosity index improving additives, acrylic acid ester copolymers are particularly suitable for such applications. However, hydraulic fluids containing the acrylic acid ester copolymers have a tendency to form acids in the presence of ambient moisture during use, particularly in high pressure (above 20 MPascals pressure) applications. Accordingly, there exists a need for multi-grade lubricants and hydraulic fluids which are less corrosive under severe operating conditions.

With regard to the above and other objects and advantages, in one embodiment, the disclosure provides an acrylic acid ester copolymer having improved characteristics. The copolymer is derived from a first acrylic acid ester monomer having from about 1 to about 4 carbon atoms, a second acrylic acid ester monomer having from about 12 to about 14 carbon atoms, and a third acrylic acid ester monomer having from about 16 to about 20 carbon atoms. The copolymer has a weight average molecular weight ranging from about 20,000 to about 100,000 daltons and contains no more than about 1 weight percent unreacted monomer, preferably less than about 1 weight percent unreacted monomer.

In another embodiment, there is provided a multi-grade lubricant having improved hydrolytic stability. The lubricant includes an antiwear effective amount of an antiwear agent and an acrylic acid ester copolymer. The acrylic acid ester copolymer includes a reaction product produced by polymerizing more than about 90 weight percent of monomers in a reaction mixture containing a first acrylic acid ester monomer having from about 1 to about 4 carbon atoms, a second acrylic acid ester monomer having from about 12 to about 14 carbon atoms, and a third acrylic acid ester monomer having from about 16 to about 20 carbon atoms, in the presence of a polymerization initiator, a chain transfer agent, and a hydrocracked group II process oil having a sulfur content of less than about 0.03 wt. %. The reaction product as made contains less than about 1 weight percent unreacted monomer.

The invention also provides a finished lubricant comprising the acrylic acid ester polymer product described above. Also provided are automatic transmission fluids and hydraulic oil compositions comprising the lubricant compositions comprising the acrylic acid ester polymer product, as well as a hydraulic system containing the hydraulic oil composition, and a vehicle containing the lubricant composition. When used in a hydraulic system, preferably said system is operable at a pressure above about 200 atmospheres.

An advantage of the embodiments disclosed herein is that fluids, such as hydraulic fluids, containing the improved viscosity index improvers may exhibit increased hydrolytic stability as compared to the same fluids containing conventional viscosity index improvers. Such multi-grade hydraulic fluids may also exhibit improved filterability as compared to conventional multi-grade hydraulic fluids. Without desiring to be bound by theory, it is believed that substantial absence of unreacted monomeric components in the viscosity index improver additive described herein contributes to the improved hydrolytic stability of fluids containing the additive.

### DETAILED DESCRIPTION OF EMBODIMENT OF THE DISCLOSURE:

As used herein, the term "copolymer" means a polymer having more than one type of repeating unit and includes, for example, oligomers, copolymers, terpolymers and tetrapolymers.

As used herein, the term "monomer" means a chemical compound or composition having an olefin double bond present in the compound or composition.

As used herein, the term "hydrocarbyl substituent" or "hydrocarbyl group" is used in its ordinary sense, which is well-known to those skilled in the art. Specifically, it refers to a group having a carbon atom directly attached to the remainder of a molecule and having a predominantly hydrocarbon character. Examples of hydrocarbyl groups include:
(1) hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form an alicyclic radical);
(2) substituted hydrocarbon substituents, that is, substituents containing non-hydrocarbon groups which, in the context of the description herein, do not alter the predominantly hydrocarbon substituent (e.g., halo (especially chloro and fluoro), hydroxy, alkoxy, mercapto, alkylmercapto, nitro, nitroso, and sulfoxy);
(3) hetero-substituents, that is, substituents which, while having a predominantly hydrocarbon character, in the context of this description, contain other than carbon in a ring or chain otherwise composed of carbon atoms. Hetero-atoms include sulfur, oxygen, nitrogen, and encompass substituents such as pyridyl, furyl, thienyl and imidazolyl. In general, no more than two, preferably no more than one, non-hydrocarbon substituent will be present for every ten carbon atoms in the hydrocarbyl group; typically, there will be one non-hydrocarbon substituent in the hydrocarbyl group.

The acrylic acid ester copolymers described herein include random copolymers containing at least three repeating units. The first monomeric repeating unit has the structural formula: 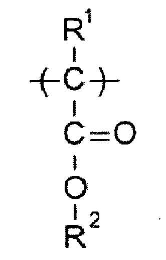 wherein each R¹ is independently selected from H or a methyl group and each R² is independently selected from a C₁ to a C₄ branched or straight chain alkyl group, for example, methyl, ethyl, n-propyl, isopropyl, n-butyl, isobutyl, t-butyl and mixtures thereof. The copolymer may contain from about 10 to about 35 percent by weight of the first repeating unit.

The second monomeric repeating unit has the structural formula: 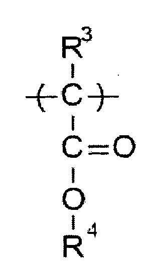 wherein each R³ is independently selected from H or a methyl group and each R⁴ is independently selected from a C₁₂ to a C₁₄ branched or straight chain alkyl group, for example, lauryl, tridecyl, myristyl, and mixtures thereof. The copolymer may contain from about 30 to about 60 percent by weight of the second repeating unit.

The third monomeric repeating unit has the structural formula: 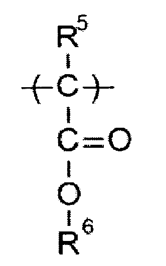 wherein each R⁵ is independently selected from H or a methyl group and each R⁶ is independently selected from a C₁₆ to a C₂₀ branched or straight chain alkyl group, for example, heptadecyl, octadecyl, cetyl, nonadecyl, eicosyl, and mixtures thereof. The copolymer may contain from about 1 to about 20 percent by weight of the third repeating unit.

As set forth above, the acrylic acid ester copolymer containing the first, second, and third repeating units is substantially devoid of unreacted monomer components providing the first, second, and third monomeric repeating units. By "substantially devoid" it is meant that the reaction product contains no more than about 1 percent by weight of unreacted monomers, and typically less than about 1 percent by weight of unreacted monomers. A number average molecular weight for the copolymer may range from about 10,0000 to about 50,000 daltons as determined by gel permeation chromatography and a weight average molecular weight for the copolymer may range from about 20,000 to about 100,000 daltons as determined by gel permeation chromatography.

The copolymers described herein may be made by free radical initiated polymerization of alkyl (meth)acrylate monomers, wherein the term "alkyl (meth)acrylate" is used to refer to alkyl acrylate monomers, alkyl methacrylate monomers and mixtures thereof. Similarly, the terminology "(meth)acrylic acid" is used herein to refer to acrylic acid, methacrylic acid and mixtures thereof. Commercially available alkyl (meth)acrylate monomers may be, and typically are, mixtures of esters. Such mixtures are typically referred to, and are referred to herein, using a contracted version of the names of the ester species predominating in the mixture, e.g., "lauryl-myristyl methacrylate", "cetyl-eicosyl methacrylate", "cetylstearyl methacrylate" and "lauryl-tridecyl methacrylate".

In a process for making the acrylic acid ester copolymers described herein, a reaction vessel devoid of oxygen is charged with a mixture of the acrylic acid esters sufficient to provide a copolymer with the desired content of the first, second, and third monomeric units described above. An effective amount of polymerization initiator, chain transfer agent, and diluent oil are also charged to the reaction vessel.

For example, a reaction vessel may be charged with from about 10 to about 25 parts by weight C₁-C₄ acrylic acid ester, from about 30 to about 50 parts by weight C₁₂-C₁₄ acrylic acid ester, from about 1 to about 10 parts by weight C₁₆-C₂₀ acrylic acid ester, from about 0.01 to about 5.0 parts by weight polymerization initiator, from about 0.05 to about 5.0 parts by weight alkyl mercaptan chain transfer agent, and from about 20 to about 40 parts by weight diluent oil to provide a reaction mixture.

Suitable polymerization initiators include initiators which disassociate upon heating to yield a free radical, e.g., peroxide compounds such as benzoyl peroxide, t-butyl perbenzoate, t-butyl peroctoate and cumene hydroperoxide; and azo compounds such as azoisobutyronitrile and 2,2'-azobis (2-methylbutanenitrile). The reaction mixture typically includes from about 0.05 wt% to about 0.5 wt% initiator relative to the total acrylic acid ester component mixture.

Suitable chain transfer agents include those conventional in the art, such as alkyl mercaptans, e.g., dodecyl mercaptan and ethyl mercaptan. The selection of the amount of chain transfer agent to be used is based on the desired molecular weight of the polymer being synthesized as well as the desired level of shear stability for the polymer, i.e., if a more shear stable polymer is desired, more chain transfer agent may be added to the reaction mixture. Preferably, the chain transfer agent is added to the reaction mixture in an amount of 0.1 to 5.0 weight percent, preferably 0.02 to 3.0 weight percent, relative to the acrylic acid ester component mixture.

The diluent may be an inert hydrocarbyl fluid and is preferably a hydrocarbon lubricating oil selected from a Group II base oil. Suitable Group II base oils typically have a sulfur content of less than about 0.03 wt.%. The reaction mixture preferably includes from about 10 to about 50 parts by weight (pbw) Group II base oil per 100 pbw total acrylic acid ester components. As used herein, "total acrylic acid ester components" means the combined amount of all monomers in the reaction mixture.

By way of example and without limitation, the reaction mixture is charged to a reaction vessel that is equipped with a stirrer, a thermometer and a reflux condenser and heated with stirring under a nitrogen atmosphere to a temperature ranging from about 50°C. to about 125°C., for a period of about 0.5 hours to about 8 hours to carry out the copolymerization reaction. In another embodiment, the copolymers may be prepared by initially charging a portion, e.g., about 25 to 60% of the reaction mixture to the reaction vessel and heating the reaction mixture to the above temperature. The remaining portion of the reaction mixture is then metered into the reaction vessel, with stirring while maintaining the temperature of the batch within the above described range, over a period of about 0.5 hours to about 8 hours. A viscous solution of the copolymer in the diluent is obtained as the product of the above-described process.

In accordance with the foregoing procedure, a copolymer product may be made wherein conversion of the monomers is about 90 % or more and the amount of unreacted monomers in the reaction product is less than about 1 percent by weight of the total weight of the reaction product. In the alternative, a copolymer reaction product may be purified by conventional techniques to remove substantially all unreacted monomers. For example, a scavenger may be used to reduce the amount of unreacted monomers in the copolymer reaction product, generally as described in U.S. Patent No. 4,737,577 to Brown.

The following non-limiting example is provided to illustrate reaction mixtures that may provide acrylic acid ester copolymers that enhance the hydrolytic stability of oleaginous fluids containing them.

**Table 1**

| | Example 1 | Example 2 |
|---|---|---|
| **Reaction Mixture Components** | (wt.%) | (wt.%) |
| Methyl methacrylate | 15.20 | 24.80 |
| Lauryl methacrylate | 43.88 | 49.80 |
| Cetyl eicosyl methacrylate | 15.27 | 14.60 |
| Azoisobutyronitrile | 0.20 | 0.25 |
| n-dodecyl mercaptan | 0.45 | 0.55 |
| Group II hydrocracked diluent oil | 25.00 | 10.00 |

| | | |
|---|---|---|
| **Copolymer Composition** | | |
| Methyl methacrylate | 20.4 | 27.8 |
| Lauryl methacrylate | 559.0 | 55.8 |
| Cetyl eicosyl methacrylate | 20.5 | 16.4 |

An acrylic acid ester copolymer product made by the foregoing procedure may be combined with a base oil, e.g., a paraffinic solvent neutral oil, in a conventional manner to provide a oleaginous composition having the desired viscometric properties. In the alternative, a concentrate containing the copolymer product may be made and added to a base oil. Typically, a lubricant composition may contain from about 1 part by weight to about 20 parts by weight of the acrylic acid ester copolymer.

The disclosure also provides a method for improving the hydrolytic stability and filterability of a multi-grade hydraulic fluid, which comprises adding to the hydraulic fluid from about 1 weight percent to about 20 weight percent, based on the total weight of the hydraulic fluid, of an acrylic acid ester copolymer as described above that is substantially devoid of unreacted monomers.

Hydrolytically stable lubricating oil compositions may include other additives in addition to the acrylic acid ester copolymer described above, e.g., oxidation inhibitors, corrosion inhibitors, friction modifiers, antiwear agents, mild extreme pressure agents, detergents, dispersants, antifoamants, additional viscosity index improvers, and pour point depressants. For example, a hydrolytically stable hydraulic oil composition may include from about 0.2 to about 1.0 percent by weight of an antiwear agent in addition to the foregoing viscosity index improver.

The antiwear agents used in combination with the acrylic acid ester copolymers described herein may be metal salts of containing sulfur and phosphorus atoms, for example, zinc dialkyldithiophosphate (ZDDP) and/or ashless antiwear agents such as glycerol monooleate. Suitable antiwear additive packages for inclusion in hydraulic oils are sold by Afton Chemical Corporation of Richmond, Virginia under the trade names HiTEC^{®} 521 and HiTEC^{®} 543. The antiwear additive packages may contain from about 40 to about 80 percent by weight antiwear agent, from about 15 to about 25 percent by weight phenolic antioxidant, from about 1 to about 10 percent by weight amine antioxidant, from about 1 to about 10 percent by weight overbased alkaline-earth metal phenate,, from about 1 to about 5 percent by weight neutral alkaline-earth metal sulfonate, from about 1 to about 5 percent by weight rust inhibitor/friction modifier, from about 0.5 to about 5 percent by weight demulsifier, and process oil.

Metal containing and ashless antiwear agents that may be used include, but are not limited to, those identified below by commercial name/code, number, and (manufacturer/ location):
HiTEC^{®}-2915 (Afton Chemical Corp., Richmond, VA)
HiTEC^{®}-2940 (Afton Chemical Corp.)
HiTEC^{®}-2916 (Afton Chemical Corp.)
Lubrizol 5178 (Lubrizol Co.; Wickliffe, OH)
Lubrizol 5703 (Lubrizol Co.)
Lubrizol 5186 (Lubrizol Co.)
Ciba ML3050A (Ciba Specialty Chemicals, Tarrytown, NY)
ELCO 103A (Elco Corp., Cleveland, OH)

The foregoing metal antiwear additives have a zinc level (wt%), phosphorous level (wt%), and specific gravity (Sp. Gr.) as set forth below:

**Table 2**

| Additive | Zinc, wt.% | Phosphorus wt.% | Sp. Gr. |
|---|---|---|---|
| HiTEC^{®}-2915 | 4.0 | 3.4 | 1.0 |
| HiTEC^{®}-2940 | 3.4 | 2.8 | 1.0 |
| HiTEC^{®}-2916 | 4.0 | 3.3 | 1.0 |
| Lubrizol 5178 | 5.5 | 4.5 | 1.0 |
| Lubrizol 5703 | 4.8 | 4.0 | 1.0 |
| ELCO 130A | 6.6 | 5.5 | 1.0 |
| Lubrizol 5186 | --- | 4.2 | 1.0 |
| Ciba ML3050A | --- | 4.2 | 1.0 |

Base oils that may benefit from additive described herein include natural oils, synthetic oils and mixtures thereof. Suitable base oils also include basestocks obtained by isomerization of synthetic wax and slack wax, as well as basestocks produced by hydrocracking (rather than solvent extracting) the aromatic and polar components of the crude. In general, both the natural and synthetic base oils will each have a kinematic viscosity ranging from about 1 to about 40 cSt at 100° C., although typical applications may require each oil to have a viscosity ranging from about 2 to about 20 cSt at 100° C.

Natural base oils can include, but are not limited to, animal oils, vegetable oils (e.g., castor oil and lard oil), petroleum oils, mineral oils, and oils derived from coal or shale. The preferred natural base oil is mineral oil.

The mineral oils useful in this invention include all common mineral oil base stocks. This would include oils that are naphthenic or paraffinic in chemical structure. Oils that are refined by conventional methodology using acid, alkali, and clay or other agents such as aluminum chloride, or they may be extracted oils produced, for example, by solvent extraction with solvents such as phenol, sulfur dioxide, furfural, dichlordiethyl ether, etc. Such oils may be hydrotreated or hydrorefined, dewaxed by chilling or catalytic dewaxing processes, or hydrocracked. The mineral oil may be produced from natural crude sources or be composed of isomerized wax materials or residues of other refining processes.

The American Petroleum Institute has categorized different basestock types as follows: Group I, >0.03 wt. % sulfur, and/or <90 vol% saturates, viscosity index between 80 and 120; Group II, ≤ 0.03 wt. % sulfur, and ≥ 90 vol% saturates, viscosity index between 80 and 120; Group III, ≤ 0.03 wt. % sulfur, and ≥ 90 vol% saturates, viscosity index > 120; Group IV, all polyalphaolefins.

Synthetic base oils include hydrocarbon oils and halo-substituted hydrocarbon oils such as oligomerized, polymerized, and interpolymerized olefins (such as polybutylenes, polypropylenes, propylene, isobutylene copolymers, chlorinated polylactenes, poly(1-hexenes), poly(1-octenes) and mixtures thereof); alkylbenzenes (including dodecyl-benzenes, tetradecylbenzenes, dinonyl-benzenes and di(2-ethylhexyl)benzene); polyphenyls (such as biphenyls, terphenyls and alkylated polyphenyls); and alkylated diphenyl ethers, alkylated diphenyl sulfides, as well as their derivatives, analogs, and homologs thereof, and the like. The preferred synthetic oils are oligomers of alpha-olefins, particularly oligomers of 1-decene, also known as polyalpha olefins or PAO's.

Synthetic base oils also include alkylene oxide polymers, interpolymers, copolymers, and derivatives thereof where the terminal hydroxyl groups have been modified by esterification, etherification, etc. This class of synthetic oils is exemplified by: polyoxyalkylene polymers prepared by polymerization of ethylene oxide or propylene oxide; the alkyl and aryl ethers of these polyoxyalkylene polymers (e.g., methyl-polyisopropylene glycol ether having an average molecular weight of 1000, diphenyl ether of polypropylene glycol having a molecular weight of 100-1500); and mono- and poly-carboxylic esters thereof (e.g., the acetic acid esters, mixed C3-C8 fatty acid esters, and C12 oxo acid diester of tetraethylene glycol).

Another suitable class of synthetic lubricating oils comprises the esters of dicarboxylic acids (e.g., phthalic acid, succinic acid, alkyl succinic acids and alkenyl succinic acids, maleic acid, azelaic acid, subric acid, sebasic acid, fumaric acid, adipic acid, linoleic acid dimer, malonic acid, alkylmalonic acids, alkenyl malonic acids, etc.) with a variety of alcohols (e.g., butyl alcohol, hexyl alcohol, dodecyl alcohol, 2-ethylhexyl alcohol, ethylene glycol, diethylene glycol monoethers, propylene glycol, etc.). Specific examples of these esters include dibutyl adipate, diisobutyl adipate, di(2-ethylhexyl) sebacate, di-n-hexyl fumarate, dioctyl sebacate, diisooctyl phthalate, diisooctyl azelate, diisooctyl adipate, diisodecyl azelate, didecyl phthalate, diisodecyl adipate, dieicosyl sebacate, the 2-ethylhexyl diester of linoleic acid dimer, and the complex ester formed by reacting one mole of sebasic acid with two moles of tetraethylene glycol and two moles of 2-ethyl-hexanoic acid, and the like.

Esters useful as synthetic base oils also include those made from C₅ to C₁₂ monocarboxylic acids and polyols and polyol ethers such as neopentyl glycol, trimethylolpropane pentaerythritol, dipentaerythritol, tripentaerythritol, and the like.

Silicon-based oils (such as the polyalkyl-, polyaryl-, polyalkoxy-, or polyaryloxy-siloxane oils and silicate oils) comprise another useful class of synthetic lubricating oils. These oils include tetra-ethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy)-disiloxane, poly(methyl)-siloxanes and poly (methylphenyl) siloxanes, and the like. Other synthetic lubricating oils include liquid esters of phosphorus containing acids (e.g., tricresyl phosphate, trioctylphosphate, and diethyl ester of decylphosphonic acid), polymeric tetra-hydrofurans, poly-α-olefins, and the like.

The lubricating compositions described above can be used in a number of applications such as in a method of operating a high pressure hybrid hydraulic pump comprising inserting the lubricant composition into the pump and operating the pump. It can also be used in a method of passing a hydrolytic stability test for a lubricant composition comprising providing the lubricant composition and conducting a hydrolytic stability test on the lubricant composition.

Lubricating oil compositions containing an effective amount of the acrylic acid ester copolymers described herein as a viscosity index improver may be used in numerous applications including gear lubrication, automatic transmission fluids, continuously variable transmission fluids, manual transmission fluids, hydraulic fluids, crankcase applications and shock absorber fluids.

Depending upon the intended end use of the lubricating oil formulations and the compositions of the present invention, the hydrolytic stability imparted by the acrylic acid ester copolymer may be adjusted by modifying the amount of unreacted monomers in the reaction product.

For example, in a high pressure hydraulic pump, it may be desirable to have a more hydrolytically stable oil composition than in other applications. In one embodiment of the disclosure, a hydraulic oil composition is prepared by adding to a base oil an acrylic acid ester copolymer as described above and an antiwear additive in an amount sufficient to provide a hydrolytically stable and filterable oil as determined by a Denison HF-0 hybrid hydraulic pump test.

The purpose of the Denison pump test is to evaluate hydraulic fluids on a combined piston and vane pump commonly used in severe mobile applications. During the test, 400 liters of finished oil are used. The same pump cartridge is used throughout a 600 hour test cycle. The test evaluates the corrosive effects of water on yellow metal in the pump. According to the procedure, a dry phase and a wet phase are used while cycling the pressure on the piston and vane pump. During the dry phase, the temperature is maintained at 70 °C. for biodegradable hydraulic fluids or 110 °C. for standard hydraulic fluids and the pressure ranges from 25 to 28 MPa over a 300 hour test period. During the wet phase, 1 wt.% water is added to the fluid, the temperature is maintained at 80° C. and the pressure ranges from 25 to 28 MPa over a 300 hour test period. At the end of the test, the parts are visually inspected and the average weight loss of the piston and vanes is determined.

The HF-0 requirements for the Denison pump test are as follows:

| | | |
|---|---|---|
| Denison T6H20C Hybrid Pump Test | | Pass |
| Rust Prevention, ASTM D665 | | |
| | D665A (Distilled Water) | Pass |
| | D665B (Synthetic Sea Water) | Pass |
| Foam Inhibition, ASTM D892 | | |
| | Volume of Foam after 10 minutes | None |
| Denison Filterability (HF-O) | | |
| | A. Dry (sec. to 75 mL) | 600 Max. |
| | B. Wet (sec. to 75 mL) | 2xA |
| Hydrolytic Stability, D2619 | | |
| | Copper Wt. Loss, mg/cm² | 0.2 Max. |
| | Acidity of Water mgKOH | 4.0 Max. |
| 1000 Hours Sludge (D-4310) | | |
| | Insoluble sludge, mg | 200 Max. |
| | TAN, mgKOH | 2.0 Max. |
| Oxidation Life, ASTM D943 | | |
| | Hours to TN 2.0 | 1500 Min. |

For other applications, oleaginous fluids may include other conventional components in addition to the acrylic acid ester copolymer and/or metal antiwear agent. For example, automatic transmission fluids, gear oils, and crankcase fluids may contain one or more antioxidants, dispersants, detergents, corrosion inhibitors, antifoam agents, rust inhibitor, extreme pressure agents, and the like.

### Antioxidant Component

The antioxidant component of lubricant compositions described herein may include at least two antioxidant compounds, i.e., a hindered phenol antioxidant and an aromatic amine antioxidant. Illustrative examples of sterically hindered phenolic antioxidants include orthoalkylated phenolic compounds such as 2,6-di-tert-butylphenol, 4-methyl-2,6-di-tert-butylphenol, 2,4,6-tri-tert-butylphenol, 2-tert-butylphenol, 2,6-diisopropylphenol, 2-methyl-6-tert-butylphenol, 2,4-dimethyl-6-tert-butylphenol, 4-(N,N-dimethylamino-methyl)-2,8-di-tert-butylphenol, 4-ethyl-2,6-di-tert-butylphenol, 2-methyl-6-styryl-phenol, 2,6-distyryl-4-nonylphenol, and their analogs and homologs. Mixtures of two or more of the foregoing phenolic compounds are also be used as the first antioxidant compound.

Aromatic amine antioxidant compounds include aromatic secondary monoamines and aromatic secondary polyamines. Illustrative aromatic secondary monoamines include diphenylamine, alkyl diphenylamines containing 1 or 2 alkyl substituents each having up to about 16 carbon atoms, phenyl-t-naphthylamine, phenyl-β-naphthylamine, alkyl- or aralkylsubstituted phenyl-β-naphthylamine containing one or two alkyl or aralkyl groups each having up to about 16 carbon atoms, alkyl- or aralkylsubstituted phenyl-p-naphthylamine containing one or two alkyl or aralkyl groups each having up to about 16 carbon atoms, and similar compounds.

The amount of antioxidant component in lubricant compositions described herein is less than about 0.5 percent by weight of the total weight of lubricant composition. Typically, the antioxidant component may range from about 0.05 to about 0.25 weight percent based on the total weight of the lubricant composition. Of the total amount of antioxidant component, the hindered phenolic antioxidant may be present in an amount that ranges from about 0.70 to about 1.30 times the amount of aromatic amine antioxidant in the lubricant composition.

### Ashless Dispersant component

The ashless dispersant that may be used in lubricant compositions described herein may be selected from any of the ashless dispersants known to those skilled in the art. A particularly preferred ashless dispersant is a hydrocaryl-substituted succinimide dispersant which is postreated to provide a boronated or boronated/phosphorylated dispersant.

Hydrocarbyl-substituted succinic acylating agents are used to make hydrocarbyl-substituted succinimides. The hydrocarbyl-substituted succinic acylating agents include, but are not limited to, hydrocarbyl-substituted succinic acids, hydrocarbyl-substituted succinic anhydrides, the hydrocarbyl-substituted succinic acid halides (especially the acid fluorides and acid chlorides), and the esters of the hydrocarbyl-substituted succinic acids and lower alcohols (e.g., those containing up to 7 carbon atoms), that is, hydrocarbyl-substituted compounds which can function as carboxylic acylating agents.

In some embodiments, the ashless dispersant may include one or more alkenyl succinimides of an amine having at least one primary amino group capable of forming an imide group. The alkenyl succinimides may be formed by conventional methods such as by heating an alkenyl succinic anhydride, acid, acid-ester, acid halide, or lower alkyl ester with an amine containing at least one primary amino group. The alkenyl succinic anhydride may be made readily by heating a mixture of polyolefin and maleic anhydride to about 180°-220°C. The polyolefin may be a polymer or copolymer of a lower monoolefin such as ethylene, propylene, isobutene and the like, having a number average molecular weight in the range of about 900 to about 3000 as determined by gel permeation chromatography (GPC).

Amines which may be employed in forming the ashless dispersant include any that have at least one primary amino group which can react to form an imide group and at least one additional primary or secondary amino group and/or at least one hydroxyl group. A few representative examples are: N-methyl-propanediamine, N-dodecylpropanediamine, N-aminopropyl-piperazine, ethanolamine, N-ethanol-ethylenediamine, and the like.

Boronated dispersants may be formed by boronating (borating) an ashless dispersant having basic nitrogen in the molecule. The boronated dispersant may contain at least one polyalkylene moiety. As a further example, the boronated dispersant, may include at least two polyalkylene moieties. The polyalkylene moiety may have a molecular weight of from about 900 weight average molecular weight to about 3000 weight average molecular weight. The polyalkylene moiety, for example, may have a molecular weight of from about 1300 weight average molecular weight to about 2100 weight average molecular weight. As a further example, the polyalkylene moiety may have a molecular weight of about 2100 weight average molecular weight. The polyalkylene moiety may include a polybutenyl group. Methods that can be used for boronating the various types of ashless dispersants described above are described for example in U.S. Pat. Nos. 3,087,936; 3,254,025; 3,281,428; 3,282,955; 2,284,409; 2,284,410; 3,338,832; 3,344,069; 3,533,945; 3,658,836; 3,703,536; 3,718,663; 4,455,243; and 4,652,387.

The boronated dispersant may be present in the lubricant composition in an amount of about 1 wt.% to about 5 wt%. Further, the power transmission fluid may include from about 1.25 wt% to about 3 wt% of the borated dispersant. Further, the power transmission fluid may include from about 1.5 wt% to about 2.5 wt% of the boronated dispersant.

Phosphorylated dispersants may be formed by treating an ashless dispersant with an inorganic phosphorus acid or anhydride. Useful phosphorus acids or anhydrides which may be useful in forming the post-treated ashless dispersant include phosphorous acid, phosphoric acid, hypophosphoric acid, phosphorus trioxide (P₂O₃), phosphorus tetraoxide (P₂O₄), and phosphoric anhydride (P₂O₅). Mixtures of two or more such compounds can be used. Most preferred is phosphorous acid (H₃PO₃). Illustrative examples of dihydrocarbyl hydrogen phosphites which may be reacted with the basic nitrogen-containing dispersants for the purposes of this invention, include diethyl hydrogen phosphite, dibutyl hydrogen phosphite, di-2-ethylhexyl hydrogen phosphite, didecyl hydrogen phosphite, dicyclohexyl hydrogen phosphite, diphenyl hydrogen phosphite, isopropyl octyl hydrogen phosphite, ditetradecyl hydrogen phosphite, dibenzyl hydrogen phosphite, and the like. Normally the hydrocarbyl groups will each contain up to about 30 carbon atoms. Mixtures of two or more such phosphites can be employed. Dibutyl hydrogen phosphite is a preferred dihydrocarbyl phosphite. Among the monohydrocarbyl-phosphites which can be utilized in the practice of this invention are included such compounds as monomethyl phosphite, monoethyl phosphite, monobutyl phosphite, monohexyl phosphite, monocresyl phosphite, monobenzyl phosphite, monoallyl phosphite, and the like, and mixtures of two or more such compounds. The hydrocarbyl group will normally contain up to about 30 carbon atoms. Mixtures of monohydrocarbyl and dihydrocarbyl phosphites are also suitable, as are the trihydrocarbyl phosphites and the sulfur analogs of the foregoing phosphites. Phosphorylated ashless dispersants are described for example in U.S. Patent No. 5,171,466.

The ashless dispersant component may also be glycolated by reacting a succinimide with glycolic acid as described in U.S. Patent No. 5,235,067.

A particularly suitable ashless dispersant is available from Afton Chemical Corporation of Richmond, Virginia under the trade name HiTEC^{®} 637.

### Extreme Pressure Agent

Various types of sulfur-containing extreme pressure agents may be used in a lubricant composition used for gear oil applications. Examples of extreme pressure agents include dihydrocarbyl polysulfides; sulfurized olefins; sulfurized fatty acid esters of both natural and synthetic origins; trithiones; sulfurized thienyl derivatives; sulfurized terpenes; sulfurized oligomers of C₂-C₈ monoolefins; and sulfurized Diels-Alder adducts such as those disclosed in U.S. reissue patent Re 27,331. Specific examples include sulfurized polyisobutene, sulfurized isobutylene, sulfurized diisobutylene, sulfurized triisobutylene, dicyclohexyl polysulfide, diphenyl polysulfide, dibenzyl polysulfide, dinonyl polysulfide, and mixtures of di-tert-butyl polysulfide such as mixtures of di-tert-butyl trisulfide, di-tert-butyl tetrasulfide and di-tert-butyl pentasulfide, among others. Combinations of such categories of sulfur-containing extreme pressure agents can also be used, such as a combination of sulfurized isobutylene and di-tert-butyl trisulfide, a combination of sulfurized isobutylene and dinonyl trisulfide, a combination of sulfurized tall oil and dibenzyl polysulfide. The amount of extreme pressure agent in a gear oil additive package for a gear oil lubricant composition may range from about 75 to about 95 percent by weight of the total weight of the additive package. In terms of active sulfur content in the lubricant compositions, the lubricant composition may contain from about 1 wt.% to about 3 wt.% active sulfur.

### Corrosion inhibitors

Copper corrosion inhibitors which may be used in lubricant compositions described herein may include thiazoles, triazoles and thiadiazoles. Examples include benzotriazole, tolyltriazole, octyltriazole, decyltriazole, dodecyltriazole, 2-mercaptobenzothiazole, 2,5-dimercapto-1,3,4-thiadiazole, 2-mercapto-5-hydrocarbylthio-1,3,4-thiadiazoles, 2-mercapto-5-hydrocarbyldithio-1,3,4-thiadiazoles, 2,5-bis(hydrocarbylthio)-1,3,4-thiadiazoles, and 2,5-bis-(hydrocarbyldithio)-1,3,4-thiadiazoles. The preferred compounds are the 1,3,4-thiadiazoles, especially the 2-hydrocarbyldithio-5-mercapto-1,3,4-dithiadiazoles and the 2,5-bis(hydrocarbyldithio)-1,3,4-thiadiazoles, a number of which are available as articles of commerce. Other suitable inhibitors of copper corrosion include ether amines; polyethoxylated compounds such as ethoxylated amines, ethoxylated phenols, and ethoxylated alcohols; imidazolines; and the like. See, for example, U.S. Patent Nos. 3,663,561 and 4,097,387. Concentrations of up to about 5 wt. % in of the corrosion inhibitor component in an additive package for a lubricant composition are typical. Preferred copper corrosion inhibitors include ashless dialkyl thiadiazoles. One example of a commercially available ashless dialkyl thiadiazole is HiTEC^{®} 4313 corrosion inhibitor, available from Afton Chemical Corporation.

### Rust Inhibitors

Rust inhibitors are another inhibitor additive typically included in lubricant compositions described herein. Such materials include monocarboxylic acids and polycarboxylic acids. Examples of suitable monocarboxylic acids are octanoic acid, decanoic acid and dodecanoic acid. Suitable polycarboxylic acids include dimer and trimer acids such as are produced from such acids as tall oil fatty acids, oleic acid, linoleic acid, or the like. Products of this type are currently available from various commercial sources, such as, for example, the dimer and trimer acids sold under the HYSTRENE trademark by the Humko Chemical Division of Witco Chemical Corporation and under the EMPOL trademark by Henkel Corporation.

Another useful type of rust inhibitor which may be used is comprised of the alkenyl succinic acid and alkenyl succinic anhydride corrosion inhibitors such as, for example, tetrapropenylsuccinic acid, tetrapropenylsuccinic anhydride, tetradecenylsuccinic acid, tetradecenylsuccinic anhydride, hexadecenylsuccinic acid, hexadecenylsuccinic anhydride, and the like. Also useful are the half esters of alkenyl succinic acids having 8 to 24 carbon atoms in the alkenyl group with alcohols such as the polyglycols.

Still other suitable rust inhibitors include ether amines; acid phosphates; amines; polyethoxylated compounds such as ethoxylated amines, ethoxylated phenols, and ethoxylated alcohols; imidazolines; aminosuccinic acids or derivatives thereof, and the like. Materials of these types are available as articles of commerce. Mixtures of such rust inhibitors may be used. The amount of rust inhibitor in the gear oil additive package component may range from about 2 to about 8 weight percent based on the total weight of the gear oil additive package.

### Antifoam agents

A foam inhibitor forms another component of a lubricant composition. Foam inhibitors may be selected from silicones, polyacrylates, surfactants, and the like. One suitable acrylic defoamer material is available from Cytec Surface Specialities of Brussels, Belgium under the trade name PC-2244. The amount of antifoam agent in an additive package for a lubricant may range from about 0.5 to about 2.0 weight percent based on the total weight of the additive package.

The following non-limiting examples are given to illustrate aspects of the disclosed embodiments. The examples are not intended to limit the embodiments as disclosed herein.

### Example 1

In the following example, an acrylic acid ester copolymer was made in a 10 liter reaction vessel. Hydraulic oils containing the reaction products from Runs 1-4 were tested for hydrolytic stability as described above. The hydraulic oils contained 6.7 weight percent of the reaction product, 0.85 weight percent of HiTEC^{®} 521 antiwear hydraulic package 86.45 weight percent AMERICAS CORE 150N base oil and 6 weight percent AMERICAS CORE 600N base oil from Exxon Mobil Corporation of Irving, Texas.

**Table 3**

| | Run 1 | Run 2 | Run 3 | Run 4 |
|---|---|---|---|---|
| **Copolymer Properties** | | | | |
| Kinematic viscosity at 62.63 wt.%, (cSt at 100°C) | 1135 | 1162 | 806 | 812 |
| Weight average molecular weight (Mw) | 58,200 | 57,000 | 68,800 | 57,700 |
| Number average molecular weight (Mn) | 33,900 | 32,800 | 40,100 | 32,300 |
| GPC conversion (%) | 99.00 | 99.90 | 94.60 | 96.10 |
| Residual monomer (wt. %) | 0.42 | 0.81 | 4.84 | 2.32 |
| | | | | |

| **Performance Characteristics** | | | | |
|---|---|---|---|---|
| **D2619 Hydrolytic Stability** | | | | |
| Copper weight loss (mg/cm²) | -0.07 | -0.07 | 1.26 | -0.17 |
| Acidity of water (mg KOH) | 0 | 0 | 1.39 | 0 |
| Copper appearance | 1A | 1A | 2B | 1A |

Runs 1 and 2 exhibited lower residual monomer content than Runs 3 and 4. Lower monomer content in the reaction product may be due to better nitrogen purging of the reactor during the polymerization process for Runs 1 and 2. As shown in Table 3, use of a copolymer having more than about 2 weight percent unreacted monomer in the product (Run 3) has a detrimental effect on the performance characteristics of the hydraulic fluid containing the copolymer. Accordingly, the hydrolytic stability for a hydraulic fluid containing a copolymer from Runs 1, 2 and 4 is significantly better than the hydrolytic stability of a hydraulic fluid containing the copolymer of Run 3.

### Example 2

In the next series of runs, copolymers were made in a full scale reaction vessel. As in Example 1, the copolymers were tested in hydraulic oils to determine the hydrolytic stability of the oils containing the copolymers. The copolymers made in Runs 5 and 6 were made with nitrogen sparging. The copolymer of Run 7 was made without nitrogen sparging.

**Table 4**

| | Run 5 | Run 6 | Run 7 |
|---|---|---|---|
| **Copolymer Properties** | | | |
| Kinematic viscosity at 62.63 wt.%,(cSt at 100°C) | 1015 | 1083 | 1139 |
| Weight average molecular weight (Mw) | 54,100 | 55,800 | 63,800 |
| Number average molecular weight (Mn) | 31,000 | 31,000 | 33,500 |
| GPC conversion (%) | 98.90 | 98.90 | 97.35 |
| Residual monomer (wt. %) | 0.30 | 0.37 | 1.33 |
| | | | |

| **Performance Characteristics** | | | |
|---|---|---|---|
| **D2619 Hydrolytic Stability** | | | |
| Copper weight loss (mg/cm²) | -0.05 | -0.06 | -0.14 |
| Acidity of water (mg KOH) | 0 | 0 | 0 |
| Copper appearance | 1A | 1A | 1A |

As shown by the foregoing examples, runs 1-2, 5-6 provide superior hydrolytic stability to fluids containing the copolymers, provided the monomer content of the copolymers added to the hydraulic oils did not exceed about 1 percent by weight of the reaction product.

In the foregoing examples, the amount of unreacted monomer was determined by proton (¹H) NMR analysis. According to the method a sample of the polymethacrylate (PMA) is weighed and diluted with deutero-chloroform (d-chloroform). To this PMA solution, a known amount of trichloroethylene (TCE) is added as an internal standard. The ¹H NMR spectrum of the sample solution is acquired, processed and plotted. Integration of the TCE and unreacted monomers is completed and the integrations are used to calculate the unreacted weight percent of the monomers in the PMA. The molecular weight (M_{w}) of the initial monomer mix is calculated and used in the weight percent calculation. Individual monomers are not distinguished by this method and are assumed to deplete at the same rate during the polymerization reaction. The method may be used to determine the amount of unreacted monomer containing methyl, butyl, lauryl, cetyl, and eicosyl methacrylates.

### Analysis Procedure

1. Weigh approximately 5 grams to the nearest 0.1 mg of PMA sample into a 20 ml scintillation vial and record the weight.
2. Add the appropriate amount of d-chloroform to the PMA vial and record the weight to the nearest 0.1 mg of d-chloroform added. Cap the vial with a septum top cap with liner. Mix the PMA into the d-chloroform until completely mixed.
3. Draw approximately 100 microliters of TCE into the syringe. Invert the syringe to remove trapped air from the syringe and barrel. Weigh the syringe with the TCE to the nearest 0.1 mg and record the weight.
4. Release gas pressure from the vial. Insert the syringe through the septum and deliver approximately 30 microliters or the appropriate amount of standard to the PMA solution. Retighten the cap on the PMA vial and mix the resulting solution. Reweigh the syringe and remaining TCE to the nearest 0.1 mg and record the weight.
5. Transfer an appropriate amount of the sample of PMA/TCE solution to an NMR tube for proton (¹H) NMR analysis.

Based on measured T₁ relaxation times, use a recycling delay sufficient for complete relaxation of the Proton (¹H) NMR signals for analysis. Typical NMR parameters are a 35-40 second recycle delay and 64 scans (NS). Analysis of the proton NMR requires that the TCE, the chemical shifts of the monomers be integrated as follows:

| Shift ID | (ppm) | Integral range (ppm) |
|---|---|---|
| TCE | 6.435 | 6.52 to 6.32 |
| Beta-proton | 6.024 | 6.10 to 5.95 |
| Alpha-proton | 5.45 | 5.53 to 5.40 |

The unreacted alkyl methacrylate monomers have two chemical shifts for the alpha and beta protons of the vinylidene olefin. An average the two chemical shift areas is completed to improve the accuracy of the analysis. The average peak areas are used in the calculation below.
A. (TCE integral area/TCE# protons(1))/(TCE added wt./TCE M_{w}) = (X-Area/H-Mole)
B. (PMA unreacted monomer integral area/PMA Monomer proton (1))/(X-Area/H-Mole) = Y-moles
C. ((PMA average M_{w})*(Y-moles))/(PMA sample weight)*100 = (Weight % monomer content)

The foregoing method is based on the assumption that all of the monomers are depleted at the same rate. The average monomer molecular weight is calculated and used for the sample M_{w} in the above calculations. The results for the unreacted alkyl monomer content are calculated to produce a total unreacted monomer concentration.

At numerous places throughout this specification, reference has been made to a number of U.S. Patents. All such cited documents are expressly incorporated in full into this disclosure as if fully set forth herein.

Other embodiments of the disclosure will be apparent to those skilled in the art from consideration of the specification and practice of the embodiments disclosed herein.

As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the disclosed embodiments are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only, with a true scope and spirit of the embodiments being indicated by the following claims.

The patentees do not intend to dedicate any disclosed embodiments to the public, and to the extent any disclosed modifications or alterations may not literally fall within the scope of the claims, they are considered to be part of the disclosed embodiments under the doctrine of equivalents.

## Claims

1. An acrylic acid ester polymer product comprising a copolymer derivable from a first acrylic acid ester monomer having from about 1 to about 4 carbon atoms, a second acrylic acid ester monomer having from about 12 to about 14 carbon atoms, and a third acrylic acid ester monomer having from about 16 to about 20 carbon atoms, wherein the copolymer has a weight average molecular weight ranging from about 20,000 to about 100,000 daltons and wherein the polymer product contains no more than about 1 weight percent unreacted monomer.

2. The acrylic acid ester polymer product of claim 1, wherein the copolymer contains from about 15 to about 35 percent by weight of a first monomeric unit containing from about 1 to about 4 carbon atoms, and/or from about 30 to about 60 percent by weight of a second monomeric unit containing from about 12 to about 14 carbon atoms, and/or from about 1 to about 20 percent by weight of a third monomeric unit containing from about 16 to about 20 carbon atoms.

3. A viscosity index improver comprising the acrylic acid ester polymer product of claim 1 or claim 2

4. A lubricant composition comprising an acrylic ester polymer product as claimed in claim 1 or claim 2.

5. A lubricant composition as claimed in claim 4 and comprising from about 1 to about 15 percent by weight of the acrylic acid ester polymer product.

6. A lubricant composition as claimed in claim 4 or claim 5 and further comprising an antiwear additive package.

7. An automatic transmission fluid containing the lubricant composition of any one of claims 4 to 6.

8. A hydraulic oil composition comprising the lubricant composition as claimed in any one of claims 4 to 6.

9. A process for preparing an acrylic acid ester polymer product which comprises polymerizing more than about 90 weight percent of monomers in a reaction mixture containing a first acrylic acid ester monomer having from about 1 to about 4 carbon atoms, a second acrylic acid ester monomer having from about 12 to about 14 carbon atoms, and a third acrylic acid ester monomer having from about 16 to about 20 carbon atoms, in the presence of a polymerization initiator, a chain transfer agent, and a hydrocracked group II process oil having a sulfur content of less than about 0.03 wt. %, and wherein the acrylic acid ester polymer product as made contains less than about 1 weight percent unreacted monomer.

10. Use of an acrylic acid ester polymer product as claimed in claim 1 or claim 2 to improve lubrication properties of a lubricating composition.

11. Use as claimed in claim 10 wherein the lubricating composition is used in a high pressure hybrid hydraulic pump.

12. Use as claimed in claim 10 or claim 11 wherein lubricating composition passes the Denison T6H20C Hybrid Pump Test.
